# EUROPEAN PATENT APPLICATION

(11) **EP 4 501 117 A1**
(43) Date of publication of application: **05.02.2025**
(21) Application number: 23188570.8
(22) Date of filing: 31.07.2023
(51) Int. Cl.: A22C 29/04

(54) **SHELLFISH CLEANING SYSTEM**

(71) Applicant: Fiscante, Massimo, 00044 Frascati Roma (IT)
(72) Inventor: Fiscante, Massimo, 00044 Frascati Roma (IT)

(57) **Abstract**

**1.2 SUMMARY**

The CleanShells project arises from the need to adopt a process/mechanism that can clean shellfish by eliminating the manual and time-consuming process, avoiding the losses that occur when dead or contaminated shellfish reach the cooking stage and at the same time delivering a best product to the consumer.

Fiscante Massimo has conceptualized a system specifically designed to clean shellfish automatically and quickly, meticulously removing all contaminants and dead specimens before cooking. Through hard work, the necessary resources were committed and the concept was developed into a series of working prototypes which are now used within the plant. The aim of the project was to find an economic/beneficial solution to eliminate unwanted and potentially dangerous substances (such as sand and plastic) in minutes, allowing restaurant owners to process shellfish efficiently and quickly, reducing waste and providing high quality food to the customer. As stated in the Commission's policies, the European Union is very attentive to the hygiene of food products at all stages of production, processing, distribution and placing on the market of food intended for human consumption. The project is the brainchild of Fiscante , an experienced entrepreneur with over 30 years of experience in the restaurant industry. The aim of this stage is to obtain Europe-wide protection for his innovative idea and to produce a feasibility assessment highlighting the commercial potential of his innovative product and to develop a business plan to grow. Activities will include market research, partner research, risk assessment, user engagement, IP protection and regulatory constraint analysis. This phase will allow us to verify the benefits of the product, such as the significant savings in processing time and energy, as well as the increase in food safety and the reduction of food losses and waste. It will enable us to target new markets and stimulate the growth of our company and create a new partnership network for product manufacturing and marketing, consequently increasing employment growth in the manufacturing sector.

The machinery is used in the last stage of processing seafood before cooking it. The appliance was built to clean and remove sand from shellfish and eliminate dead shellfish (clams, truffles, cockles). It is built with a steel container which is connected with a pipe to the drinking water from the tap. The tube that brings the water to the container is made of plastic; the first end of the hose is connected to the drinking water tap. The other end is connected to the steel container where the water flow rate is reduced through a nozzle which creates more water pressure. With this pressure, a vortex is created in the container which makes the seafood spin, which necessarily pass under the water jet, opening up: the seafood full of sand and the semi-open ones that are broken and already dead are expelled from the shell; therefore, only live, closed and well-cleaned seafood remains. All this happens in a few minutes. The steel container is circular and has two holes: one where the water enters through the nozzle and one is the drain which is located about halfway up its height where the excess water goes down, taking with it the sand they had all seafood inside. The shellfish are thus ready to cook and when they are opened in the pot they are certainly clean, without the bad surprises of finding shellfish full of sand and mud or with a bad smell because they have been eliminated, thus avoiding contaminating the other shellfish good.

## Description

### Excellence

### Challenge and solution

### Customer's pain point

One of the main problems currently faced is that shellfish lovers eat up to 11,000 plastic fragments in their fish every year, as established in various reports .. https://www.theguardian.com/lifeandstyle/2017/feb/14/ sea-to-plate-plastic- http: /www.cbc.ca/news/technology/microplastics-fish-shellfish-1.3954947 http://www.cbc.ca/news/canada/british-columbia/microplastics-bc- 1.3687557 http://mentalfloss.com/article/91476/eating-shellfish-likely-means-eating-plastic-scientistssav.With our innovative CleanShells product, we are collaborating with universities and conducting various studies to produce a report of comparative analysis, examining the molluscs containing the contaminants found in shellfish before using the CleanShells product and comparing the results of the report after the cleaning process. During our initial study it was also revealed that the manual process for the time needed to remove unwanted substances from the shells can take a long time and not all unwanted substances are always removed. Furthermore, the current shell cleaning mechanisms that exist on the market today are not suitable for removing sand / plastic or bad shells and in most cases many shells are thrown away due to the difficulty of recognizing dead molluscs.

The implementation of the CleanShells project would facilitate the processing of food production, eliminate unwanted substances, such as plastics, and reduce food losses and waste by contributing to research and innovation for today's and tomorrow's food systems.

### Business need

The concept of the CleanShells project is to provide an economic cleaning mechanism to be used in the last phase of shellfish processing, as hygiene is of the utmost importance, compliant with safety standards and internationally recognized foods such as HACCP . The advantages of this new mechanism would allow restaurant and hotel owners, fish vendors and supermarkets to treat shells efficiently and quickly, reducing waste and offering customers high quality food.

Before using this new cleaning mechanism, the normal manual process was used which proved to be long and laborious. The reason why shells have sand is because they live buried in sand or mud. This closeness to the grit naturally brings the sand into the molluscs, which filter when their shells are partially open, or how the contaminants enter. These shells are collected and sold, however they require cleaning before cooking. Currently, all restaurants and hotels use the manual procedure before cooking which requires an intensive manual labor process; the kitchen staff is used where they touch the shells one by one to remove the sand or mud, however it is not always the case that the shells are left completely clean. Furthermore, this method does not identify the dead samples included in the package that contaminate the entire lot if cooked with healthy crustaceans. It is also known that the cleaning process for home dwellings is a laborious process in which the shells are left in water overnight, which allows the sand to filter through the repeated process until the water is cleaned. The CleanShells project completely removes the manual process and within 2 minutes all unwanted and potentially harmful substances, including dead samples, are automatically removed from the batch, leaving only the good / clean shellfish ready for cooking. Furthermore, due to the current problems that the company is facing with the plastic present in our fish products, as specified above, the use of the CleanShells product will eliminate the problem of shell food products.

### Technological challenge

During our initial study we conducted a preliminary investigation and discovered that there is no product or mechanism to clean molluscs such as clams or truffles, eliminating contaminants and plastic in the final phase before consumption. There are other mechanized solutions, but they are intended for use immediately after fishing and are of an industrial scale. Moreover, these devices clean the outside of the shell without eliminating the contaminants contained inside. These systems use rotating brushes and are therefore subject to wear. they need motorization so the costs and energy expenditure is high. The invention poses a challenge from the technological and industrial point of view to satisfy the supply of safe, nutritious and high quality foods, all with respect to sustainability and zero environmental impact. Our CleanShells project will provide an automated process in the last phase of shellfish processing and aims to provide high quality food and at the same time reduce waste in a highly efficient manner. Furthermore, the CleanShells project is aligned with a number of EU strategic policies and programs, as cited in the future of food security and EU nutrition policy https://www.omiesonline.org/proceedings/eu-food-safety -in-2050-future-challenges-and-policy-preparation-33324.html. The regulations aim to guarantee a high level of food safety and nutrition within an efficient, competitive, sustainable and innovative global market.

### Market opportunities

The CleanShells project represented an opportunity in the restaurant, hospitality and production sector due to the potential of the solution. The project is aimed at European and global markets as it is very attractive for SMEs and large companies, contributing to increasing European competitiveness and in particular: (a) Increasing cooperation in setting standards for safe food (b) Greater relevance of private food standards (c) Continuous consolidation of the legislative framework on food safety and nutrition (d) Increasing the importance of communication on food safety (e) Increasing concern about risks related to food safety and the food supply chain (f) Continuous risk of negligence and failure of food safety mechanisms and (h) Pressure for greater recycling and less waste throughout the food chain. Once the final version of CleanShells is implemented in our pilot markets (Italy / Spain / Portugal), we intend to extend our activities to other European and global markets. Market segmentation and priority setting will be based on the market research study to be conducted during phase 1. CleanShells is unique not only in the European market but also globally by directly addressing the challenges of the EU and once implemented, the project will meet the above expectations and requirements a global market.

### Current state of the art market

As stated above, at present there is no product or mechanism to clean shellfish such as clams or truffles in the final phase before consumption. There are other mechanized solutions, but they are intended for use immediately after fishing and are of an industrial scale. Moreover, these devices clean the outside of the shell without eliminating the contaminants contained inside. Consequently, the current method used is manual cleaning of the shell. The cleaning process for shellfish such as clams and truffles is very laborious and time-consuming. This process is also expensive because the current procedure is completely manual. The use of the CleanShells product has already increased our clientele and improved our business and services. Furthermore, the work involved and the waste (in terms of dirty portions) has reduced immensely, saving us time and money. This initial study clearly demonstrated the advantages of our solution and we believe we will have an excellent market position.

### Gender

Gender and sex considerations in the CleanShells project will comply with EC recommendations that guarantee equal rights for all men and women of all ages. The CleanShells project will follow all the procedures necessary to ensure and promote equal participation in the feasibility study (interviews, participation in demonstrations, etc.). Our company has adopted internal procedures to ensure equality and diversity in the workplace. Climate change or environmental aspects, benefits for society The adoption of the CleanShells project would benefit society by providing the hospitality and catering industry with a low-cost product that allows them to thoroughly clean crustaceans from unwanted and potentially harmful substances, reducing the risk of contaminants being present in the portions of their customers. Industry, in turn, would benefit from a reduction in waste and consequently improve profitability in their operation. Furthermore, the CleanShells project would allow distributors to place a new product on the market and then generate additional turnover and jobs. From an environmental point of view, the widespread adoption of the project and the consequent reduction of shellfish waste by the catering and hospitality sectors could have a sufficient impact to reduce the demand for shellfish. This would reduce the fishing needs of molluscs and consequently decrease the negative effects on the environment and on the environment deriving from the techniques used for the fishing of these species, such as dredging. Furthermore, environmental sustainability is positively influenced by the optimized use of materials and a more intelligent production planning.

The invention also does not require motorization and is placed among the category of machinery with zero environmental impact, also because at the end of the process there is no wastewater to dispose of any polluting solid or gaseous contaminant.

### Historical evolution

CleanShells is a project that has begun to improve the quality of shellfish in terms of hygiene, remove unwanted substances, eliminate waste and reduce the time spent during the cleaning process. During our initial study, we analyzed the process for the time required to clean the shellfish and we had an idea on how to speed up the process. We developed our idea and created a prototype and the results obtained were encouraging. During this experiment we realized that not only the efficiency of the cleaning process has improved, but also resulted in less waste and higher quality food, since it optimizes the cleaning process for better food quality while reducing waste and processing times. The experimental tests carried out with the prototype, in a time of two years of experimental measurements, have shown results, already immediately, more than satisfactory, far exceeding the results necessary to pass to the industrial product phase. The product has shown that it is now ready to allow us to pursue our idea, to validate our concept and to produce a feasibility assessment that highlights the commercial potential of our innovative product and to develop a business plan for strengthening. Current stage of development The CleanShells project is currently being prepared for TRL 6 where a prototype has been demonstrated in a relevant environment. The prototype has already been used and proved to be effective. It has greatly reduced labor costs and waste reduction has clearly demonstrated since the contaminated shells were removed immediately. With this result we conducted a survey to gather opinions from key industry personnel, such as restaurants, hotels, in order to get an idea of the interest in this product. The results were very positive, many said that there is currently no product to clean clams or truffles and the removal of manual processes that reduces the time taken for the cleaning process by removing unwanted substances will create huge cost savings for their activities. This interest can be found in section 6 of this proposal.

### Feasibility study

Phase 1 SMEs The purpose of SME Phase 1 is to produce a feasibility report to assess the feasibility of the CleanShells project. During this phase we aim to assess the commercial situation in terms of available market and commercial opportunities and establish partnerships for production and distribution. Our goal is to make customers aware of the unique point of sale of the CleanShells product, communicating our brand and marketing. Our goals for SME phase 1 can be described as follows: 1. Evaluate the commercial situation in terms of available market, competition and business, opportunities and establish partnerships for production to bring the idea to TRL9 2. Evaluate legal and IP aspects and regulatory compliance 3. Extrapolate the financial forecasts and prepare a financial plan 4. Develop our initial business plan and produce a detailed feasibility report. The SME Phase 1 will allow us to assess whether the CleanShells project is economically feasible and to identify the steps, strategies and concerns to be considered to reduce time-to-market. This study will also address the development of an industrial value chain to set and validate the scalability of our product, the definition of an IP management strategy, the achievement of realistic financial projections and the establishment of sales and partnership agreements.

Further phases and activities necessary to market our product. In the event of a positive result of the feasibility study, we intend to promote the CleanShells product and bring our solution further into a product ready for the market. We intend to apply for a grant under the PMI II Instrument Phase together with established partners and seek further assistance under the Phase III PMI. The feasibility study will provide the roadmap for the CleanShells marketing strategy and the plan to be implemented. Activities will include production and distribution with key contacts, ensure legal and IP aspects, and regulatory compliance will meet national requirements. From a commercial point of view, we would request the preparation of the marketing material for our new product, the organization of seminars and other events to strengthen the position of our CleanShells product and develop brand awareness. To help us work in a network with SME Clients and larger companies and services to help us access international markets, we intend to apply for a Phase III SME as EU support and coaching structures will certainly increase awareness of our brand of product Successful completion of all activities would allow a formal launch of the CleanShells product.

### Impact

### Enter the market (users / types of markets / dimensions / growth rate

### Users

Users of the solution can be classified as follows along with the reasons why these users will take the CleanShells product:
Direct users: Restaurants / Hotels - who will benefit from the low-cost CleanShells solution to improve service, reduce waste, reduce labor costs and provide high quality food.
Fishmongers and supermarkets - To provide better service to their customers
Consumers - who will benefit from the solution to quickly and efficiently clean shellfish before consumption rather than the manual process
Indirect users: distributors - who will benefit from having an innovative and convenient product on the market to offer to their customers
Wholesalers - Industrial catering equipment - will have the opportunity to sell a new profitable product to customers (retailers - household items)

The adoption of the CleanShells project would benefit from a global perspective as it offers an innovative solution with a disruptive potential within the shellfish industry.

Willing to pay: as mentioned above, we are already interested in the CleanShells product. Restaurants, hotels and fishermen have clearly shown that this will increase customers, reduce waste and at the same time save on processing times. Producers and distributors have also shown interest and are very keen to produce the product as this will create a huge business opportunity due to its uniqueness. Letters of commitment were also provided. Please refer to section 6 of this proposal.

Unique points of sale: the introduction of the CleanShells product on the market at an affordable price will create many opportunities for business owners within the food and production industry. These opportunities include:
Restaurants / hotels will save time in the cleaning process and reduce waste, improving their service by providing high quality food. Hot air balloon / Super market - Some supermarkets and hot air balloons offer the service to clean muscles through mechanized means, but at the moment there is no solution available for sea clams and sea truffles. This solution will give them the opportunity to provide this service to their customers, thus providing a better service and an opportunity to increase their sales.

Wholesalers and retailers will have an innovative and economically advantageous product for their customers on the market. Citizens will benefit from this product not only to produce high quality food, but will also have the opportunity to use this product in their homes by eliminating the cleaning process. manual. We have received interest from renowned parties, Risto Italia which has a franchise of restaurants and fishermen and Italia Resort which owns hotels and restaurants. Furthermore, we have also received interest from Pescheria Italia which supplies fish in various restaurants and hotels in Italy and for export. All, among others, have provided letters of commitment and are willing to take on the CleanShells solution. Markets During our initial market analysis, we conducted a study and initial statistics showed that Spain is the largest consumer of shellfish in Europe (270,000 hotels / restaurants), however Italy has the largest catering / hospitality companies ( 312,000 hotels / restaurants). The figures are based on statistics relating to Euro statistics. Http://ec.europa.eu/eurostat/data/database Consequently, we plan to implement the CleanShells product in Italy before being our starting point followed by Spain and further extending our business to other European countries starting with Portugal is famous for seafood. Market segmentation and priority setting will be based on the detailed market research study that will be conducted during our phase 1 feasibility study.

### Competitors

Our solution is rather unique in that there is no direct competitor offering this type of product. As described in section 1.1.3.1 our main competitors are manual processes and suppliers that supply industrial equipment, however this objective is the cleaning of molluscs after fishing and not before cooking, furthermore, these equipments do not deal with clam cleaning or sea truffles. A preliminary comparative price analysis was conducted and will be reviewed in detail during our feasibility study.

Our prices, based on a preliminary analysis of cost, market and competition; is as follows: The equipment and labor required to produce the CleanShells product is estimated at € 110 net per unit and we aim to sell each unit for € 150. We calculate that it requires 30 minutes of manual work to clean 1 kg of shellfish, thus saving about 25 minutes of labor per kg of processed shellfish with better quality results. The actual cost of the solution depends on the specific labor costs and the quantity of shellfish required, however, it can easily be estimated that the cost of € 150 will be quickly recovered from the time savings. Furthermore, the current products available on the market to clean shellfish like muscles, oysters exceed 500 euros, reaching even over 1,000 euros. One of the advantages of our CleanShells product is its low cost production which allows us to offer an economical and convenient price for our customers.

### Market obstacles:

The main identified market barriers are described below and will be further examined during our phase 1 feasibility study.

Anticipated before entering the market from a similar competing product - Competitors may react and attempt to emulate our solution because there is no direct competitor offering this type of product. At the moment, our product is unique and there is no direct competitor that offers the same solution. Being new to the market, we expect that we would have achieved a high degree of market penetration and built a strong brand reputation with the industry to position ourselves in a favorable position before any competitor can deliver a similar product that could match ours. Furthermore, we are already in the process of patenting our product to ensure that our innovation is adequately protected.

Lack of awareness - In order to advertise our product, we need to reach our stakeholders who will in turn advertise our product on the market. We intend to work with a production company (letters of interest have already been provided) that have the resources to produce the product on an industrial scale and advertise it. We intend to analyze this aspect during our phase 1 feasibility study (T1.4) and, in turn, will publicize the benefits of this product through industry-related publications and increase awareness by participating in trade shows and events specializing in each geographic market, allowing us to demonstrate Product. We also intend to seek support through the Joint Exploitation Exploitation Initiative to prepare an adequate basis for the exploitation strategy.

### Model of business

Company general business strategy CleanShells has been created with a clear focus on creating a new innovative and low-cost solution that not only accelerates the food chain process, but also significantly reduces the current manual process, thus improving productivity, addressing food safety, reducing waste and offering high quality food for customers. The project aligns perfectly with the Company's current business strategy - to support the adoption of CleanShells and to create an effective product launch strategy and ensure rapid market uptake through our final marketing plan. Il Timone will guarantee a structured approach, in terms of business planning and strategy development, necessary to bring this product to market successfully. We expect CleanShells to become our most significant product in terms of growth, turnover and profit generated by the third year of commercial sales. The positive outcome of the CleanShells project is very important for us and through the Phase 1 project for EU SMEs will provide the company with a level of credibility and confidence that supports us to achieve our final goal. Value chain / interested parties As mentioned above, the main customers will be Restaurants, Hotels, Ballooning and Supermarkets. The main stakeholders to be involved to achieve successful commercial exploitation are the partner organizations necessary to produce the product and the wholesalers and distributors that make up the distribution channel. We are already evaluating various organizations that can produce this product and distribute it in destination countries. We have already started discussions with our stakeholders and have already shown interest and are willing to take on the CleanShells product. Please refer to the letters of commitment, section 6. Producing a new solution on the market will undoubtedly increase their revenues and create business opportunities.

Business model Our CleanShells business model will be based on revenue generated by royalties. During our feasibility study we will analyze the tariff structure to guarantee the most suitable model for SMEs in the manufacturing sector. During this phase we will examine the royalties payment scheme. To prove this, we will analyze the return on investment to hire CleanShells with our current committed customers and prepare a pricing structure for market launch. Based on our preliminary study, we expect a percentage payment on the actual sales generated, producers / distributors would be able to sell the product directly to end users. The result demonstrated a high income for all parties, however this still needs to be investigated during our feasibility study. Scalability to reach European and global markets The distribution and visibility of the CleanShells project are considered of exceptional importance. Although the final marketing plan depends on the results obtained from the feasibility study, some marketing considerations have already been taken: The marketing of CleanShells can be pursued through many different channels. So far, we have secured interest from production and distribution partners. Having this at hand, high growth and international impact could be achieved more easily. The main barter is the lack of awareness of our solution that could be mitigated with appropriate marking activities. Our marketing strategy will be to create awareness and participate in specialized events, such as retail sales, conferences and food fairs and to demonstrate our product to the public. We are already actively engaged in communication with the various interested parties in Europe and recently we participated in the New Delhi appliances and appliances Fair which attracts national and international exhibitors to exhibit products and provide insights on the latest trends. Here we had the opportunity to promote our solution and meet various companies such as retailers, wholesalers, distributors and start accumulating long-term business relationships. We also participated in Kitchen Equipment, Services and design show in Birmingham to demonstrate our product and demonstrated to the public the benefits that the CleanShells product has to offer.

### Financing

### Ownership of the company and capital structure

Il Timone di Fiscante Massimo was established in 2008 and the goal was to provide high quality food for customers. The company was established by Mr. Massimo Fiscante is based in Italy. Fiscante is the only owner to have 100% of the shares and has a turnover of 89 K in 2017. The objective of the CleanShells project is to validate this innovative idea and to produce a feasibility assessment that highlights the commercial potential of the innovative product and to develop a business plan for upgrading. As a result, we have identified the financial requirements to carry out this study and have secured 30% of the costs required to complete this phase.

### Expected growth potential

One of the objectives of the feasibility study will be to undertake a detailed study of market opportunities. Our anticipated market share, derived from the initial business plan, should only be considered a preliminary assessment. Taking our indicative price, we expect a total product turnover of € 4,080,000 and royalty-related derivatives of € 765,000 by the end of the third year of marketing.

Furthermore, to support the forecast propagation of the product, additional employees, supported by the sales revenue stream, will be specifically required in the areas of product diffusion / support and sales. With already high-profile customers, we expect an immediate take-off with the product. This project will not only bring significant revenues and will directly create new business opportunities and job growth, but will create new jobs and new business opportunities in various sectors.

Financing requirements The financing requirements for SME Phase 1 will mainly focus on resources for conducting various activities. These activities include market analyzes that will include market research, partner search and user involvement; Evaluation of the corporate strategy of the impact of product marketing (commercial and financial assessments) which allows us to validate the scalability of the CleanShells product; the definition of an IP management strategy, risk assessment, the study of national and international financing opportunities and the definition of sales and partnership agreements. If the feasibility study is successful, the requirements to advance the CleanShells product to reach the marketing phase will involve further investments. Based on our preliminary study, we plan to work with interested parties to produce and distribute CleanShells. In order to increase market penetration and reach high volumes, we will seek further investments to continue expanding into new markets. In view of this, we will examine the financing schemes together with the partners for the SME Phase 2 or through national funding, including private investors. This will be analyzed during our feasibility study (T1 / T2). Other financing will eventually be required to bring the machinery from the industrial prototyping stage through advanced mechanical design

### Freedom to operate, knowledge protection and regulatory issues

Our freedom to carry out analysis has been carried out by our IP lawyer and no violations have been identified that allow the full exploitation of the product. We have also registered a CleanShells brand in Europe and internationally, currently managed by our IP lawyers: De Tullio and Partners, who are assisting us in developing our IP portfolio.

Protection of intellectual property and knowledge: we already have non-disclosure agreements with our lawyers and our first users. This process will also be applied through employment contracts to protect employees to safeguard the mechanism and the internal mechanisms of the product that are vulnerable to disclosure.

Regulatory aspects - We have already started to examine the regulatory frameworks of the EU and our reference markets, in particular in relation to health and safety regulations and intend to conduct further assessments, of a broader scope, to ensure that we remain in line with the EU rules and regulations. (T1.1)

### Implementation

### Team: results and roles

The main coordinator of the project, Massimo Fiscante, will be the only interface with the global market and will be responsible for drawing up the business plan and coordinating the entire CleanShells project and presenting the final feasibility report (T3). Fiscante is the owner of the company and coordinates a series of activities and is responsible for company performance, quality standards including health and safety. In order to promote the company's "sales efforts", Fiscante carried out a pre-analysis study that defines and analyzes the CleanShells project. The goal is to produce a business case to evaluate and validate the activities to reach the marketing phase. Fiscante will also be responsible for the legal feasibility, the optimal strategy to be implemented in the field of intellectual property protection and the examination of the regulatory frameworks together with the solicitor and legal advisors. (T1.1).

### Technical description

The invention can be categorized as belonging to the industrial cleaning sector applied to the food industry.

The ultimate goal of the device is to clean the molluscs by turning them into a chamber containing water and air, without any motorization. The process that the machine performs can be compared, by way of example, with spraying water at high pressure on the mollusk while it is rotated by placing all the points of the mollusk, both internal and external, in sight of the flow. Its effectiveness is almost the same as that which would be obtained by opening the mollusc and eliminating sand and impurities with a flow of water at a pressure higher than that of the domestic one.

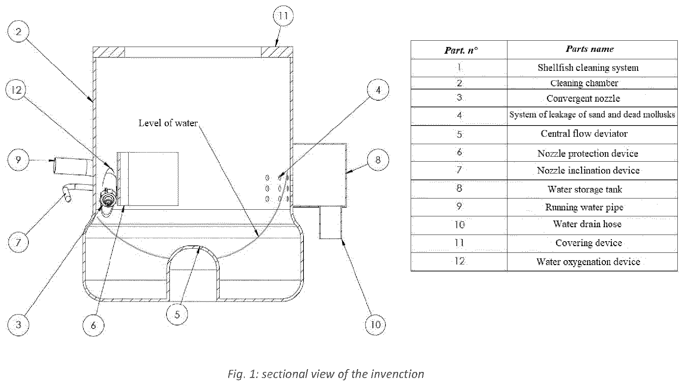

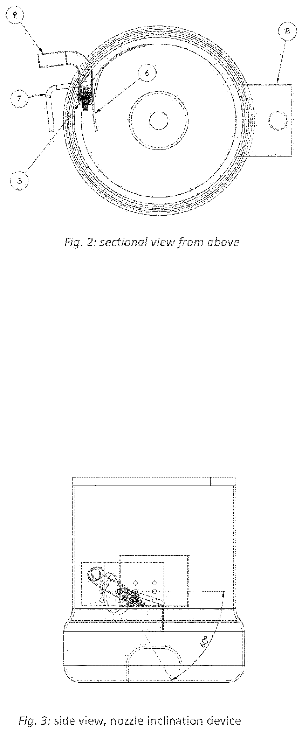

The molluscs rotate at high angular speed inside a vortex, confined in a chamber and formed by water and air. The tangential speed assumed by the molluscs during rotation provides sufficient energy to remove the sand through the impact energy generated during motion. The invention therefore consists of a mechanical device that converts the potential energy of domestic water into flow conditions with a speed not exceeding 1.5 m / s and a pressure not exceeding 2 bar, in kinetic energy, increasing the speed outgoing and using this energy to form the vortex in which the molluscs perform the cleaning. Figure 1 below shows a sectional view of the invention, aimed at better describing the device.

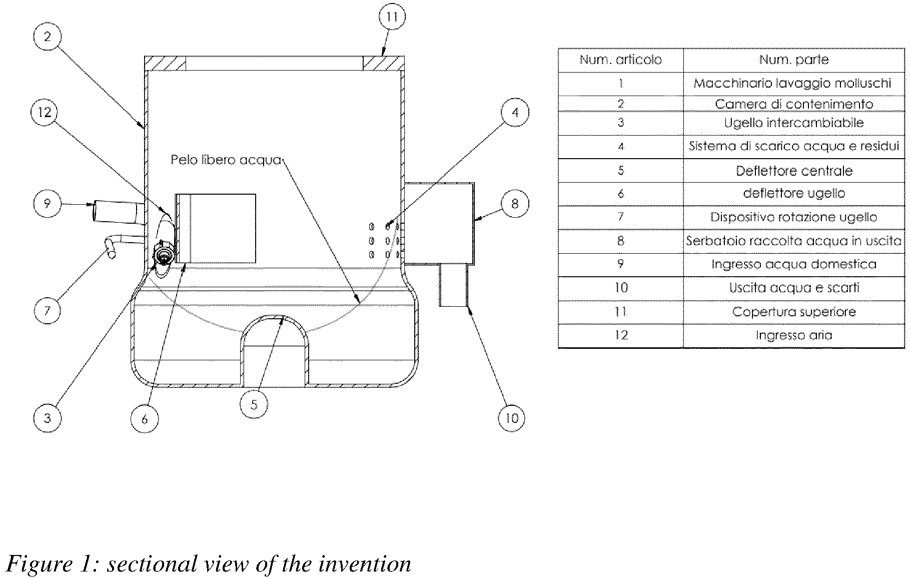

The water for domestic use enters from the inlet pipe [9], under the conditions set by the standard (maximum speed 1.5 m / s), through a simple connection to the tap. Immediately after it passes through the nozzle [3], which is connected to the containment chamber [2] and where, mechanically converting potential energy into kinetic energy, it increases its speed. The nozzle [3], to perform this function, is convergent, that is it passes from a larger section to a smaller section. The flow of water, formed by domestic water and ambient air, introduced into the chamber [2] through the device [12]. The mixture is fired inside, in a direction tangent to the chamber wall [2]. The direction of entry conditions the flow of the flow so there is a device for adjusting the inclination of the nozzle [7] that performs this function. Following the shapes of the chamber wall [2], aided by a central flow variator [5], the mixture of water and air begins to rotate with a rotary motion forming a free surface of water similar in shape to that shown in blue in figure 1; lower towards the center and higher outside. In particular, in the part near the nozzle the flow is lower due to the deflector [6], which in addition to preventing impacts between the nozzle and the shellfish during motion, with the risk of damage, serves to reduce pressure drops and the consequent energy losses due to sudden changes in trajectory. The molluscs, inserted from above, are thus put in rotation together with the water and the air with a resistance to the trajectory given only by their inertia. The energy and the different physical phenomena generated inside the chamber, clean the molluscs removing sand and dead molluscs from inside the shell. The waste and residues, after having rotated for a few turns within the chamber [2] to the maximum, come out of the carvings [4] made on the surface of the chamber [2]. The notches are placed below the free surface which, due to the centrifugal force, is higher towards the outside of the chamber rather than in the center. The outgoing water, in equal flow to the inlet water, is the waste material. they first pass through a small tank [8] and finally exit the drain [10]. In order to avoid splashes, there is a cover [11] open in the center to allow the introduction of the processing product.

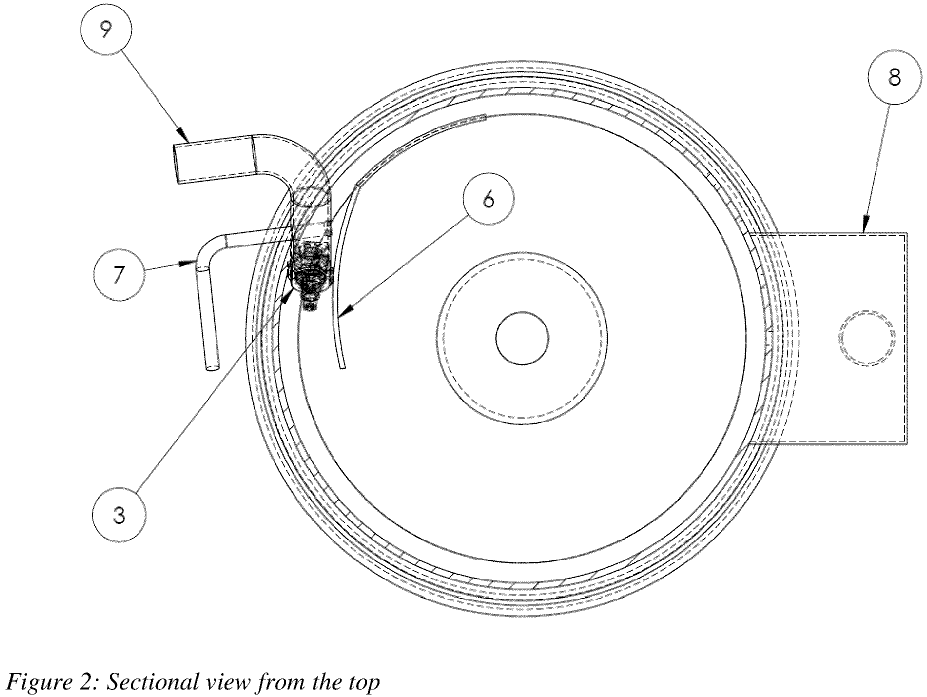

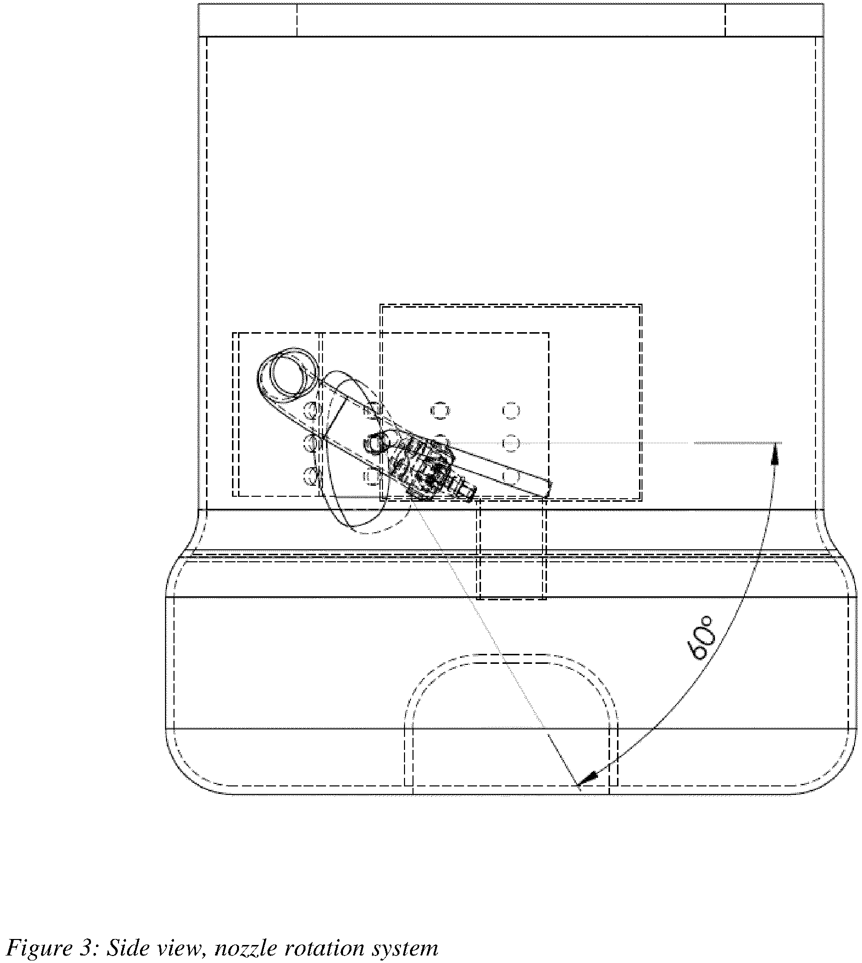

The invention does not need electric motors to operate and does not produce polluting waste waters, sand and water can in fact be dispersed in the aqueducts. The invention has a self-cleaning function. Once the treatment is finished, the chamber is also clean and does not need to be rinsed since all the impurities, including any previously present in the chamber, have been removed. The invention does not require a post-treatment of the processed products. The molluscs are in fact ready to be cooked and served without further treatment. In addition to saving time and improving hygiene, the self-cleaning effect also results in a longer lasting device. The machine also does not require special maintenance and there are no components subject to wear or fatigue failure. These features mean that it can become an ingenious commercial product that is easy to use. In addition to this, the environmentally sustainable aspect of the device and the process must be considered, the environmental impact is zero.

The invention presents different devices and physical and fluid dynamic concepts which, reworked for the application of shellfish cleaning, can be explained by resorting to established examples of state-of-the-art technologies and techniques.

In order to better describe the innovation, examples of the art technique will be brought forward, and compared with innovation to demonstrate its value.

A technology, for example, developed through a machine known as a "cyclone", uses a rotating flow inside a containment chamber, to separate air from particulate matter.

Link: https://it.wikipedia.org/wiki/Ciclone_.

In these systems a flow of air and particulate, pushed by a compressor, is inserted in a tangential direction to a cylindrical chamber. The dust, pushed by the centrifugal force towards the walls of the chamber, and by the force of gravity towards the bottom, completes a downward spiral movement. The powder descends towards the bottom and is collected, while the air rises towards the other and is purified. The most common use is in air purification filters. In the invention, instead of the compressor (electric energy) that increases the thrust, we have the nozzle that increases speed. We have a liquid instead of air. Both systems use centrifugal force to push particulate matter outwards. The innovation in this case is that notches or holes have been made in the chamber wall, and the particulate (sand) is immediately expelled. Using the centrifugal force, the mixture of water, air, sand, impurities and dead shellfish is pushed towards the wall and comes out of the carvings ending up in the discharge device. The innovative aspect also lies in the fact of using a physical concept that is so essential and at the same time complex, and putting it into practice with important process variables, in a very different field of application from that of the state of the art.

To better understand another aspect of the invention, we resort to a physical phenomenon that occurs particularly in marine propellers, the phenomenon of cavitation.

Link: https://it.wikipedia.org/wiki/Cavitazione.

Cavitation is that phenomenon in which a particle of fluid, subjected to a pressure difference, implodes, generating a shock wave capable of pitting the surface of the blades, worsening their efficiency. In the propeller poles, low pressure zones are created that lead to the formation of microbubbles of steam. These micro-bubbles just leave the low-pressure zone, implode and generate a very powerful shock wave at the same time. In fact, in marine propellers this phenomenon leads to the wear of very resistant steels. Innovation has been to use this disadvantageous physical phenomenon in the naval field, in a physical phenomenon advantageous in the field of industrial food cleaning. Just like the propeller blades, in fact, the shells of molluscs have a geometry that leads to the creation of areas of depression and therefore to the formation of micro bubbles with consequent implosion. The shock wave removes the sand and impurities of the mollusc. Since the angular velocities are much lower than those of the propellers in this case, unlike the naval field, we have no destructive effect, but only improvements.

Another state-of-the-art technology, which can be used to explain the innovative aspect of machinery, is found in the industrial cleaning sector in the particular application of jewelery.

Link: https://www.otec.de/it/prodotti/levigatura/macchine-per-finitura-a-disco-centrifugo/ .

In these devices, a fan placed in the lower part of the chamber and driven by a motor, rotates the abrasive granulate, placed inside the chamber, and similar in size and specific weight to the marine sand. The thrust given by the blades of the horizontal propeller, form a vortex with a mixture trend very similar to that shown in figure 1. In this way the products are inserted inside, such as gold rings. These begin to rotate inside the chamber with an absolute rotation speed equal to the fan rotation speed, but with a relative speed of zero. This allows the rings to never hit each other, as otherwise they will cause damage. The impact between the granulate and the abrasive leads to the surface finish of the rings. This technique is validated and brings indisputable results. The invention takes a similar technique and readjusts itself to mollusc cleaning. First and foremost, the inventor, Massimo Fiscante, succeeded in creating a whirling motion without using motors. Water (1000 Kg / m ^ 3) has a lower density than granules (2000 Kg / m ^ 3), so less energy is required. Furthermore, the sand that is expelled from the mollusks, enters the vortex and makes a few turns before going out. In these rounds it behaves in the same way as the industrial ring polishing device; the sand hitting against the outer part of the shells, cleans them and eliminates surface impurities, in the case for example of "hairy mussels" could eliminate all the external part in a short time. It has ui energy ... but at the same time it does not have the necessary energy to re-enter the mollusk. It also polishes the shells that appear to be more shiny and hygienic. The great innovation is that this phenomenon is generated in which the waste sand itself is used to perform polishing. In addition, the sand, unlike state-of-the-art devices, is automatically ejected after making some rotations. The relative motion created between the molluscs means that there are no knocks between them, so as to safeguard the molluscs themselves from possible damage. This extremely innovative aspect makes it possible to treat even large volumes of products simultaneously.

The product therefore has many innovative features, some of which come from the creativity of Mr. Massimo Fiscante, others that come from a knowledge of physical principles conceptually validated and applied by the inventor to the field of shellfish cleaning.

## Claims

1. - Shellfish cleaning system comprising a cleaning chamber, a continuous water and air inlet system, by means of a nozzle, a continuous water discharge system, a system of deflectors or flow diverters and an upper protection system . The system contains deflectors of different shape and geometry designed to shape the flow path. The system consists of a device for the discharge of residues made with notches and placed near the free surface of the water.

2. - Cleaning chamber [2]: The cleaning chamber is made of food grade material such as AISI 316 L, or similar materials. The chamber can also be made of plastic materials for food use and can be transparent. The room is circular or oval. It can have areas with variable radius along its height in order to convey the fluid mixture in specific areas and can be of different diameters. It has an attachment for the water inlet system which is carried out by welding or threading technology or quick coupling and release. A protection device [11] is present in the upper part of the chamber, which can be closed (cover) or open. The open cover is made through a hole in the center that allows you to see from above the running system and insert the shellfish. The fluid chamber has a nozzle protection device which can be of any shape, and which has the purpose of preventing the mollusc and the fluid particle, after making a complete turn, to hit the nozzle itself. The chamber also contains a system of leakage of dead sand and molluscs [4], [8] and [11], by means of notches or holes in the chamber that may be one or more.

3. - Injection nozzle [3]: The injection nozzle according to claim [1] is made of stainless material for food use. It is hooked into the outer part of the chamber and pointed tangentially towards the geometry of the chamber. The input and output sections can be variable. A hooking and unhooking system will be realized in order to be able to insert different nozzles according to the type and conditions of the shellfish to be worked. The nozzle coupling system can be tilted from 0 ° to 60 °, thanks to the device [7]. The nozzle has a protection system [6] according to claim [1] which can be part integrated with the nozzle itself. The nozzle is a device that can be made using manufacturing technologies or purchased ready-made. Its shape can be not only cylindrical, but also in a laminar form. The nozzle is in itself representative of the conversion system of potential energy into kinetic energy.

4. - Dead sand and shellfish spillage system [4]: as per claim [1] and [2] realized by drilling, cutting and bending of the chamber material. The carvings are located near the free hair that the water reaches during its whirling motion. They are diametrically opposed to the nozzle [3]. They can also be in different positions and replicated along the circumference of the chamber, as per claim [2]. The shapes of the holes can be of different geometry and shape.

5. - Central flow deviator [5]: as per claim [1] and [2], which is made of material for food use. It can be of any shape, geometry and height, and is located in the center of the chamber. It can be realized by welding a component, or it can be realized through the technology of drawing the chamber itself. It can also be interchangeable.

6. - Nozzle protection device [6]: as per claim [1] and [3]. The nozzle protection system can be obtained directly from the chamber by bending the sheet, or it can be made separately and welded or bolted into the chamber. Its geometry is such as to accompany the flow in its motion and therefore has a radius of connection that approaches that of the chamber. The diverter is positioned before the nozzle, claim [3], in the opposite direction to the outlet direction of the water flow. The material is for food use, if it is taken from the room it is the same. Its height must be necessary to protect the nozzle.

7. - Nozzle inclination device [7]: as per claim [1] the device has the purpose of being able to tilt the nozzle to shape the fluid motion, in order to work different types of shellfish.

8. - Water oxygenation device [12], as claimed in claim [1]. The air inside the flow is important because it oxygenates the molluscs and through the implosion of the bubbles causes an energetic wave capable of removing the sand and other impurities present in the mollusk in a timely manner. The oxygenation device can be made using the nozzle protection system, claim [6]. If the protection system is made by cutting the sheet metal of the chamber and lifting it, near this opening, the fluid passes a very high angular speed with respect to the air speed in the environment which is close to zero. The increase in the speed of the fluid in rotation causes a decrease in pressure, which in the vicinity of the opening given by the device [6], causes the air to enter inside, since it moves from greater pressure (environment), to less pressure (fluid).

9. - Water inlet [9]: the system has a hook that is compatible with hydraulic pipes of kitchens or taps. It can be rigid or made with flexible cables. The diameter can be variable. This device is connected to domestic water.

10. - Water outlet device [10]. This device is used to drain water. It can be made with a rigid or flexible tube of different sizes.
